# EUROPÄISCHE PATENTSCHRIFT

(11) **EP 2 307 232 B1**
(45) Veröffentlichungstag und Bekanntmachung des Hinweises auf die Patenterteilung: **20.03.2013**
(21) Anmeldenummer: 09777424.4
(22) Anmeldetag: 24.07.2009
(51) Int. Cl.: B60N 2/225

(54) **VERSTELLEINRICHTUNG, INSBESONDERE FÜR EINEN FAHRZEUGSITZ**
ADJUSTING DEVICE, PARTICULARLY FOR A VEHICLE SEAT
DISPOSITIF DE RÉGLAGE, EN PARTICULIER POUR UN SIÈGE DE VÉHICULE

(30) Priorität: 24.07.2008 DE 102008034800
(43) Veröffentlichungstag der Anmeldung: 13.04.2011
(73) Patentinhaber: Johnson Controls GmbH, 51399 Burscheid (DE)
(72) Erfinder: SCHULZ, Dirk, 42899 Remscheid (DE); HAIDA, Stefan, 42855 Remscheid (DE)
(74) Vertreter: Wolff, Felix
(86) Internationale Anmeldenummer: PCT/EP2009/005386
(87) Internationale Veröffentlichungsnummer: WO 2010/009893

(56) Entgegenhaltungen:
- WO-A-2005/024264
- DE-A1-102007 017 617

## Beschreibung

Die Erfindung betrifft eine Verstelleinrichtung zur Durchführung mindestens einer Verstellfunktion, insbesondere nach dem Oberbegriff des Anspruchs 1.

Eine derartige Verstelleinrichtung ist aus der WO 2005/024264 A1 bekannt.

Weitere Verstelleinrichtungen sind beispielsweise aus US 4, 211, 451, DE 32 01 309 sowie der US 2005/0245348 A1 bekannt und sind beispielsweise zum elektrischen oder vorzugsweise manuellen Betätigen einer Vorrichtung zur Einstellung der Höhe eines Kraftfahrzeugsitzes geeignet. Die Verstelleinrichtung wandelt dabei ein eingehendes Antriebsdrehmoment in ein höheres Abtriebsdrehmoment um, welches zur Winkelverstellung daran angeschlossener Bauteile, beispielsweise des Sitzhöhenverstellers, genutzt wird. Um von der Antriebseinheit auf das Planetengetriebe wirkende Drehmomente zumindest zu vermindern, weisen die Verstellvorrichtungen Bremseinrichtungen auf. Die aus dem Stand der Technik bekannten Verstelleinrichtungen sind jedoch vergleichsweise kompliziert aufgebaut und/oder schwierig zu montieren. Weiterhin ist nachteilig, dass die Anzahl der Betätigungen der Verstelleinrichtung für den gewünschten Verstellweg zu hoch sind.

Es war deshalb die Aufgabe der vorliegenden Erfindung eine Verstellvorrichtung zur Verfügung zu stellen, die die Nachteile des Standes der Technik nicht aufweist.

Gelöst wird die Aufgabe mit einer Verstelleinrichtung gemäß Anspruch 1.

Mit der erfindungsgemäßen Verstelleinrichtung können beliebige Einstellungen an einem Verstellmechanismus vorgenommen werden. Vorzugsweise dient die erfindungsgemäße Verstelleinrichtung jedoch zur Verstellung eines Kraftfahrzeugsitzes. Beispielsweise kann mit der erfindungsgemäßen Verstellung die Höhe der Sitzfläche, die Neigung der Rückenlehne relativ zur Sitzfläche sowie die Form des Sitzes verändert werden. Die erfindungsgemäße Verstellung kann sowohl manuell als auch motorisch angetrieben werden. Die erfindungsgemäße Verstelleinrichtung ist einfacher aufgebaut als Verstelleinrichtungen gemäß dem Stand der Technik und einfacher herzustellen. Mit der erfindungsgemäßen Verstelleinrichtung wird derselbe Verstellweg mit einer geringeren Anzahl von Betätigungen erzielt.

Mit der Bremseinrichtung werden Drehmomente, die vom Abtrieb auf den Antrieb wirken zumindest teilweise, vorzugsweise vollständig abgehalten. Vorzugsweise wirkt die Bremseinrichtung in zwei Drehrichtungen.

Erfindungsgemäß weist die Verstelleinrichtung mindestens ein, vorzugsweise mehrere Federmittel zwischen dem Antrieb und der Bremseinrichtung auf. Als Federmittel kommt jedes dem Fachmann bekante Federmittel infrage, das nach einer elastischen Verformung seine ursprüngliche Form wieder einnimmt. Das Federmittel kann aus Kunststoff und/oder Stahl gefertigt sein.

Das Federmittel setzt den Antrieb, bevorzugt unmittelbar, nach jeder Betätigung in eine Ausgangslage zurück und entkoppelt dabei den Antrieb von der Bremseinrichtung. Dadurch weist die erfindungsgemäße Verstelleinrichtung weniger Freispiel auf. Außerdem wird die Gefahr einer Selbstentriegelung der Bremseinrichtung zumindest verhindert.

In einer bevorzugten Ausführungsform weist der Antrieb einen Aktuator und die Bremseinrichtung ein Bremsteil auf. Das Federmittel ist zwischen diesen angeordnet. Bei einer Bewegung, vorzugsweise einer Drehung, des Aktuators, die das Bremsmittel zumindest nicht vollständig mitmacht, verformt sich das Federmittel. Sobald die den Antrieb bewirkende Kraft entfällt, bewegt das Federmittel den Aktuator und/oder die Bremsmittel in ihre Ausgangslage zurück, in der sie insbesondere nicht mehr im Eingriff zueinander stehen.

Vorzugsweise wird das Federmittel kraft- und/oder formschlüssig in dem Aktuator und/oder in dem Bremsteil aufgenommen ist. Dies erfolgt insbesondere durch Einbuchtungen, die sich in dem Aktuator und/oder dem Bremsteil befinden und die das Federmittel jeweils teilweise aufnehmen.

Vorzugsweise wirkt die Bremseinrichtung in zwei Drehrichtungen.

Im folgenden wird die Erfindung anhand der Figuren 1 - 7 erläutert. Diese Erläuterungen sind lediglich beispielhaft und schränken den allgemeinen Erfindungsgedanken nicht ein.
- Figur 1: zeigt eine Explosionszeichnung einer aus DE 10 2007 017 617 A1 bekannten Verstelleinrichtung.
- Figur 2: zeigt die Bremseinrichtung.
- Figur 3: zeigt das Zusammenspiel zwischen Bremseinrichtung und Antrieb
- Figur 4: zeigt eine Explosionszeichnung der erfindungsgemäßen Verstelleinrichtung.
- Figur 5: zeigt Details des Aktuators und des Bremsteils.
- Figur 6: zeigt das Federmittel zwischen dem Aktuator und dem Bremsteil.
- Figur 7: zeigt wie das Federmittel in dem Bremsteil angeordnet ist.

Die in den folgenden Figuren beispielhaft und schematisch dargestellte Verstelleinrichtung 1 weist ein verripptes Gehäuse 2 beispielsweise aus Kunststoff 2, aus welchem die mit einer feinen Verzahnung versehene und im Gehäuse 2 gelagerte Antriebswelle 3 herausragt. Auf diese Verzahnung kann später ein Handrad zur manuellen Betätigung der Verstelleinrichtung 1 aufgesteckt oder ein Motor angeschlossen werden. Das Gehäuse 2 weist ferner Bohrungen 4 zur Befestigung der Verstelleinrichtung 1 auf, beispielsweise an dem seitlichen Träger der Metallstruktur eines Sitzteils. Das Gehäuse 2 innenseitig mit einer koaxial zur Antriebswelle 3 verlaufenden Innenverzahnung 5 versehen, in welcher drei Planetenzahnräder 6 um eine in das Gehäuse 2 hineinragende Außenverzahnung 7 der Antriebswelle 3 umlaufen. Bei einer Drehung der Antriebswelle 3 wandern die Achsen 8 der Planetenzahnräder 6 somit im Gehäuse 2 mit einer gegenüber der Antriebswelle 3 verringerten Drehzahl auf einer Kreisbahn. Die Antriebswelle 3 kann ein Kompensationsmittel, beispielsweise einen Kompensationsring aufweisen, mit dem Fertigungstolleranzen ausgeglichen, Geräusche vermindert und/oder ein fühlbarer Drehwiderstand erzeugt wird. Die Drehung der Antriebswelle 3 wird von einem ringförmigen Planetenträger 9 aufgenommen, der koaxial zur Antriebswelle 3 drehbar ist. Der Planetenträger weist aus seiner Axialfläche parallel zu seiner Drehachse in Richtung der Planetenzahnräder 6 auskragende Achsbolzen 10 auf. Auf diesen Achsbolzen 10 sind die Planetenzahnräder 6 drehbar gelagert. Die zuvor beschriebenen Bauteile (Baugruppe A) bilden somit ein Planetengetriebe aus. Das Planetengetriebe ist in zwei Drehrichtungen drehbar.

Der Planetenträger 9 ist die Schnittstelle zu einer freilaufartigen Bremseinrichtung (Baugruppe B), welche von der Abtriebsseite her auf die Verstelleinrichtung 1 einwirkende Drehmomente von dem Planetengetriebe (Baugruppe A) möglichst vollständig fernhalten soll. Diese Drehmomente können in zwei Drehrichtungen wirken. Die Baugruppe 13 besteht aus einem aus Stahlblech gestanzten Bremsring 11, der sich nach außen erstreckende Laschen 12 aufweist. Der Bremsring 11 wird in das komplementär geformte Gehäuse 2 eingeschoben, wobei sich Bohrungen 13 in den Laschen 12 mit den Bohrungen 4 des Gehäuses 2 decken. Der Bremsring 11 ist ferner mit einer kreisförmigen Ausnehmung 14 versehen, welche koaxial zur Antriebswelle 3 verläuft und den Innenring 15 der Bremseinrichtung aufnimmt.

Im Spalt 16 zwischen dem Bremsring 11 und dem Innenring 15 sind paarweise zylinderförmige Wälzkörper 17, 17' angeordnet, wobei die Wälzkörper 17, 17' jedes Paares durch einen dazwischen liegenden, als Federmittel wirkenden Elastomerkörper 18 auseinander gespreizt werden. Der Fachmann erkennt, dass es sich aber auch um jedes beliebige andere Federmittel, beispielweise eine Spiralfeder handeln kann. Der Außenumfang des Innenrings 15 ist derart gestaltet, dass der Spalt 16 im Bereich jedes Elastomerblocks 18 größer als der Durchmesser der gleichartigen Wälzkörper 17, 17' ausgebildet ist, sich jedoch vom Elastomerblock 18 weg auf eine Höhe kleiner dem Durchmesser der Wälzkörper 17, 17' verengt. Jedes Paar von Wälzkörpern 17, 17' ist somit in einem Teilumfang des Spalts 16 gefangen. Bei der Drehung des Innenrings 15 relativ zum Bremsring 11 verklemmt sich, aufgrund einer Spiralgeometrie 36 an dem Innenrings 15 zum Wälzkörper 17, 17' hin, jeweils ein Wälzkörper 17 eines Paares im sich verengenden Bereich des Spalts 16, so dass eine weitere Drehung verhindert wird. Bei der Drehung des Innenrings 15 in Gegenrichtung erfolgt das Verklemmen durch den anderen Wälzkörper 17' des Paares. Somit wird verhindert, dass signifikante Drehmomente, die bei einem Unfall auftreten, auf das Planetengetriebe übertragen werden.

Der Planetenträger 9 ist auf seiner der Baugruppe A abgewandten Seite mit paarweisen Vorsprüngen 19, 19' ausgestattet, welche zwischen den Paaren von Wälzkörpern 17, 17' in den Spalt 16 hineinragen. Die Zwischenräume 21 zwischen jedem Paar von Vorsprüngen 19, 19' wirken spielbehaftet mit Ansätzen 20 auf dem Außenumfang des Innenrings 15 zusammen, während die den Zwischenräumen 21 abgewandten Flächen der Vorsprünge 19, 19' bei Drehung des Innenrings 15 alternativ auf die Wälzkörper 17, 17' einwirken. Bei der Drehung des Innenrings 15 werden hierdurch zunächst die verklemmten Wälzkörper 17, 17' gelöst, wobei das Spiel zwischen den Vorsprüngen 19 jedes Paares und den Ansätzen 20 aufgebraucht wird. Sobald jeder Vorsprung 19 am zugeordneten Ansatz 20 anliegt, wird unmittelbar ein Drehmoment vom Planetenträger 9 auf den Innenring 15 übertragen. Bei einer Drehung in Gegenrichtung erfolgt dies sinngemäß durch einen Kontakt zwischen den Ansätzen 20 und den Vorsprüngen 19'.

Auf dem Innenring 15 ist auf der der Baugruppe A abgewandten Seite eine Anlaufscheibe 22 angeordnet, welche sich mit dem Innenring 15 dreht und an dem Gehäusedeckel 23 anliegt. Die Außenkontur des mit dem Gehäuse 2 verrastbaren Gehäusedeckels 23 ist deckungsgleich zum Bremsring 11 ausgebildet, so dass diese in gleicher Weise in das Gehäuse 2 eingesetzt werden können. Der Gehäusedeckel 23 ist mit einem koaxial zur Antriebswelle 2 ausgerichteten Durchzug 24 versehen, in welchem die Abtriebswelle 25 gelagert ist. In diesem Fall ist der Gehäusedeckel vorzugsweise aus einem metallischen Werkstoff gefertigt. Der Gehäusedeckel kann jedoch aus Kunststoff gefertigt sein für den Fall, dass er lediglich als Schutz benötigt wird. Der Gehäusedeckel wird an der vormontierten Einheit form- und/oder kraftschlüssig angebracht, beispielsweise angeschraubt oder angenietet. Vorzugsweise wird der Deckel 23 jedoch mit einem Schnellverschluss, beispielsweise einem Schnappverschluss, an dem Gehäuse 4 angebracht Die zur Antriebswelle 3 koaxial verlaufende Abtriebswelle 25 weist einen zur Lagerung geeigneten Zylinderbereich 26 auf, an den sich nach außen das Abtriebsritzel 27 anschließt. Auf der gegenüber liegenden Seite ist die Abtriebswelle 25 mit einem Polygonprofil 28 versehen, welches spielfrei in eine komplementär gestaltete Ausnehmung 29 im Innenring 15 eingreift. Der Fachmann erkennt, dass die Abtriebswelle 25 und der Innenring 15 einteilig ausgeführt sein können.

Bei Betätigung der Verstellvorrichtung 1 wird das Antriebsmoment somit über die Antriebswelle 3, die Planetenzahnräder 6 und den Planetenträger 9 auf den Innenring 15 und von dort auf das Abtriebsritzel 25 übertragen. Ein von der Abtriebsseite her wirkendes Drehmoment wird über die Abtriebswelle 25 auf den Innenring 15 übertragen und nachfolgend durch Verklemmen der Wälzkörper 17 oder 17' vom Bremsring 11 abgefangen. Planententräger 9, Planentenzahnräder 6 und Gehäuse 2 werden hierdurch entlastet und können entsprechend schwächer dimensioniert werden.

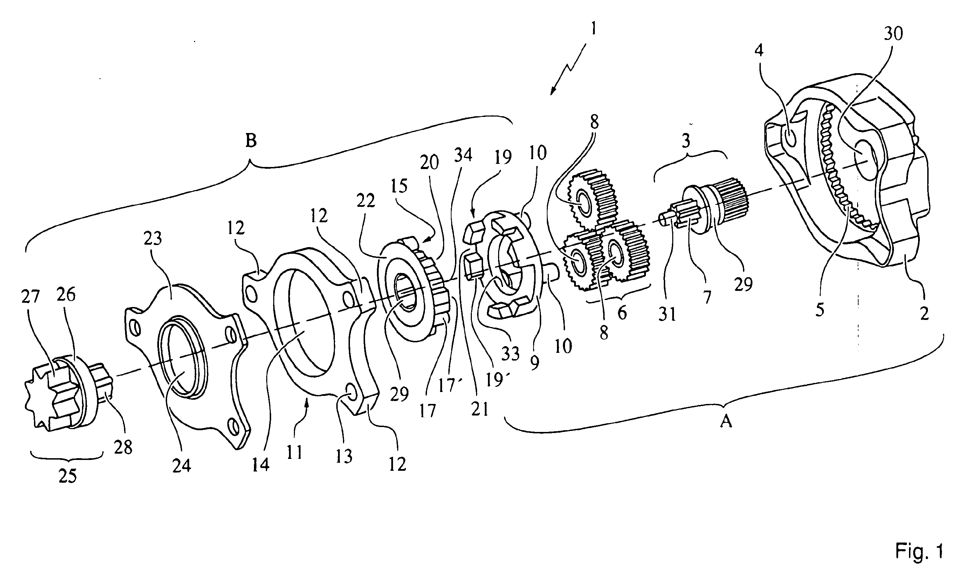

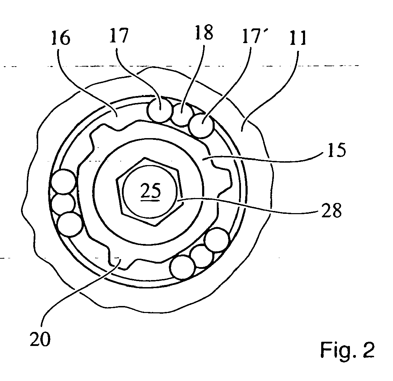

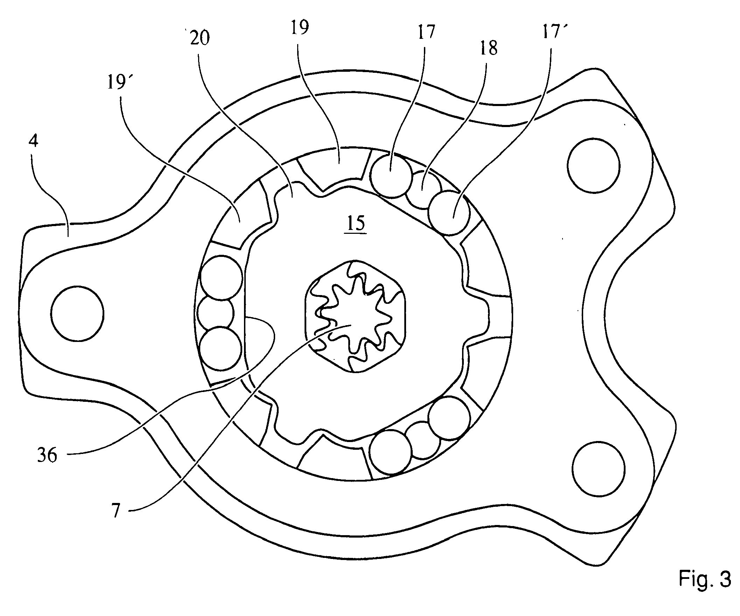

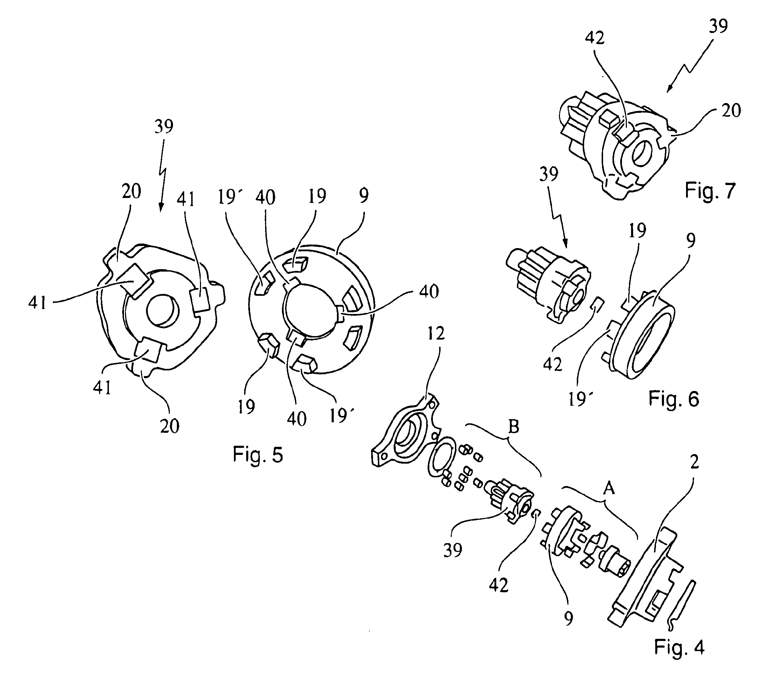

Figur 4 zeigt eine Ausführungsform der erfindungsgemäßen Verstelleinrichtung, die auf der Verstelleinrichtung gemäß den Figuren 1 - 3 basiert, wobei der Fachmann erkennt, dass die erfindungsgemäße Verstelleinrichtung nicht auf diese Ausführungsform beschränkt ist, sondern jede Verstelleinrichtung umfasst, die einen Antriebsteil und einen Bremsteil aufweist. Aus Figur 4 ist zu erkennen, dass zwischen dem Antrieb A und der Bremseinrichtung B ein Federmittel angeordnet ist. Insbesondere weist die Antriebeinheit A einen Aktuator 9 und die Bremseinrichtung B ein Bremsteil 39 auf.

Zwischen diesen beiden Teilen 9, 39 ist das Federmittel 42 angeordnet Sobald ein Drehmoment auf den Aktuator 9 ausgeübt wird, verformt sich das Federmittel 42 elastisch bis das Form-und/oder Kraftschlussmittel 20 des Aktuators 9 an dem Form und/oder Kraftschlussmittel 19,19' des Bremsteils 39 anliegt. Sobald das Drehmoment an dem Aktuator 9 nicht mehr anliegt, wird insbesondere der Aktuator in seine Ausgangslage zurückverdreht, sodass das Mittel 20 nicht mehr an den Mitteln 19,19'anliegt.

Figur 5 zeigt Details des Aktuators 9 und des Bremsteils 39. Es ist deutlich zu erkennen, dass beide Einbuchtungen 40 bzw. 41 aufweisen, die jeweils zumindest teilweise das Federmittel 42 aufnehmen.

Figur 6 zeigt noch einmal den Aktuator 9 und das Bremsteil 39 und das dazwischen angeordnete Federmittel 42.

Figur 7 zeigt wie das Federmittel 42 in das Bremsteil 39 eingefügt ist. Analog wird das Federmittel 42 in die Ausnehmung 40 des Aktuators 9 eingefügt.

### Bezugszeichenliste

- 1: Verstelleinrichtung
- 2: Gehäuse
- 3: Antriebmittel, Antriebswelle
- 4: Bohrung
- 5: Innenverzahnung
- 6: Planetenzahnrad
- 7: Außenverzahnung
- 8: Achse
- 9: Planetenträger, Aktuator
- 10: Achsbolzen
- 11: Bremsring
- 12: Lasche
- 13: Bohrung
- 14: Ausnehmung
- 15: Innenring
- 16: Spalt
- 17, 17': Wälzkörper, Bremskörper
- 18: Elastomerblock, Federmittel
- 19, 19': Vorsprung, Einbuchtung, Form- und/oder Kraftschlussmittel
- 20: Ansatz, Vertiefung, Form- und/oder Kraftschlussmittel
- 21: Zwischenraum
- 22: Anlaufscheibe
- 23: Gehäusedeckel
- 24: Durchzug
- 25: Abtriebswelle
- 26: zylinderförmiger Bereich Abtriebsreal
- 28: Polygonprofil
- 29: zylinderförmiger Bereich
- 30: Bohrung
- 31: Bolzen
- 32: Bohrung
- 33: Innenumfang
- 34: Ringvorsprung
- 35: Kompensationsmittel, Kompensationsring
- 36: Mitnehmergeometrie, Spiralgeometrie
- 37: Schulter
- 38: Vorsprung, Nase
- 39: Bremsteil
- 40: Ausnehmung
- 41: Ausnehmung
- 42: Federmittel
- A: Planetenradgetriebe, Antrieb
- B: Bremseinrichtung

## Patentansprüche

1. Verstelleinrichtung (1) zur Durchführung mindestens einer Verstellfunktion, insbesondere zur Verstellung eines Kraftfahrzeugsitzes, mit einem Antrieb (A), der ein Antriebsmittel (3) und einen Abtrieb (25) aufweist und einer Bremseinrichtung (B), welche von dem Abtrieb (25) auf das Antriebsmittel (3) einwirkende Drehmomente weitestgehend abhält, wobei zwischen dem Antrieb (A) und der Bremseinrichtung (B) mindestens ein Federmittel (42) angeordnet ist, welches den Antrieb (A) nach jeder Betätigung in eine Ausgangslage zurückversetzt, **dadurch gekennzeichnet, dass** das Federmittel (42) dabei den Antrieb (A) von der Bremseinrichtung (B) entkoppelt.

2. Verstelleinrichtung nach Anspruch 1, **dadurch gekennzeichnet, dass** der Antrieb (A) einen Aktuator (9) und die Bremseinrichtung (B) ein Bremsteil (39) aufweist und dass das Federmittel (42) zwischen diesen angeordnet ist.

3. Verstelleinrichtung nach Anspruch 2, **dadurch gekennzeichnet, dass** das Federmittel (42) kraft- und/oder formschlüssig in dem Aktuator (9) und/oder in dem Bremsteil aufgenommen ist.

4. Verstelleinrichtung nach Anspruch 1 **dadurch gekennzeichnet, dass** die Bremseinrichtung in zwei Drehrichtungen wirkt.

## Claims

1. Adjusting device (1) for performing at least one adjusting function, particularly for adjusting a motor vehicle seat, having a drive (A), which has a drive means (3) and an output (25), and a braking device (B), which very largely prevents any torques from the output (25) acting on the drive means (3), at least one spring means (42) being arranged between the drive (A) and the braking device (B) which spring means (42) moves the drive (A) back into a starting position after each actuation, **characterized in that** the spring means (42) thereby decouples the drive (A) from the braking device (B).

2. Adjusting device according to Claim 1, **characterized in that** the drive (A) has an actuator (9), and the braking device (B) has a braking part (39), and **in that** the spring means (42) is arranged between them.

3. Adjusting device according to Claim 2, **characterized in that** the spring means (42) is mounted with nonpositive and/or positive engagement in the actuator (9) and/or in the braking part.

4. Adjusting device according to Claim 1, **characterized in that** the braking device acts in two directions of rotation.

## Revendications

1. Dispositif de réglage (1) pour mettre en oeuvre au moins une fonction de réglage, en particulier pour le réglage d'un siège de véhicule automobile, comprenant un entraînement (A) qui présente un moyen d'entraînement (3) et une prise de force (25), et un dispositif de freinage (B) qui inhibe dans une large mesure les couples agissant de la prise de force (25) sur le moyen d'entraînement (3), au moins un moyen de ressort (42) étant disposé entre l'entraînement (A) et le dispositif de freinage (8), lequel ramène l'entraînement (A) après chaque actionnement dans une position de départ, **caractérisé en ce que** le moyen de ressort (42) désaccouple ainsi l'entraînement (A) du dispositif de freinage (B).

2. Dispositif de réglage selon la revendication 1, **caractérisé en ce que** l'entraînement (A) présente un actionneur (9) et le dispositif de freinage (B) présente une partie de freinage (39) et **en ce que** le moyen de ressort (42) est disposé entre ceux-ci.

3. Dispositif de réglage selon la revendication 2, **caractérisé en ce que** le moyen de ressort (42) est reçu par engagement par force et/ou par coopération de forme dans l'actionneur (9) et/ou dans la partie de freinage.

4. Dispositif de réglage selon la revendication 1, **caractérisé en ce que** le dispositif de freinage agit dans deux sens de rotation.
